# EUROPÄISCHE PATENTSCHRIFT

(11) **EP 2 294 266 B1**
(45) Veröffentlichungstag und Bekanntmachung des Hinweises auf die Patenterteilung: **25.01.2012**
(21) Anmeldenummer: 09765590.6
(22) Anmeldetag: 13.06.2009
(51) Int. Cl.: E04B 1/00, E04B 2/78, E04D 3/06, F16S 1/14, E04C 3/04, E04D 3/08

(54) **WAND-, DECKEN- ODER BODENELEMENT SOWIE BAUWERK UND BAUSATZ AUS MEHREREN SOLCHEN ELEMENTEN**
WALL, CEILING, OR FLOOR ELEMENT AS WELL AS STRUCTURE AND ASSEMBLY COMPRISING SUCH ELEMENTS
ÉLÉMENT DE CLOISON, DE PLAFOND OU DE SOL AINSI QUE OUVRAGE ET KIT DE CONSTRUCTION COMPRENANT DE TELS ÉLÉMENTS

(30) Priorität: 20.06.2008 DE 102008029108
(43) Veröffentlichungstag der Anmeldung: 16.03.2011
(73) Patentinhaber: Minch, Marion, 76199 Karlsruhe (DE); Minch, Klaus, 76199 Karlsruhe (DE)
(72) Erfinder: Minch, Marion, 76199 Karlsruhe (DE); Minch, Klaus, 76199 Karlsruhe (DE)
(74) Vertreter: Lenz, Steffen
(86) Internationale Anmeldenummer: PCT/EP2009/004277
(87) Internationale Veröffentlichungsnummer: WO 2009/153010

(56) Entgegenhaltungen:
- AT-B- 324 654
- CH-A5- 629 885
- DE-A1- 1 920 525
- DE-A1- 4 415 037
- DE-U1- 9 012 607
- DE-U1- 29 706 994
- US-A1- 2006 179 788

## Beschreibung

Die Erfindung betrifft ein Wand-, Decken- oder Bodenelement für ein aus solchen Elementen zusammensetzbares Bauwerk, insbesondere in Form eines Gewächshauses oder eines Warmhauses oder Geheges für Pflanzen und/oder Tiere, wobei das Wand-, Decken- oder Bodenelement eine von einem Rahmenprofil eingefasste Platte aufweist und wobei das Rahmenprofil einen Querschnitt aufweist, welcher umfasst:
- eine rechteckige Grundstruktur;
- eine L-förmige Ausnehmung im Bereich einer der Ecken der rechteckigen Grundstruktur zur Aufnahme der Platte derart, dass die Platte parallel zu einer der mit der L-förmigen Ausnehmung versehenen, dieser benachbarten Seiten der rechteckigen Grundstruktur an dieser festgelegt ist; und
- je eine im zentralen Bereich von wenigstens drei Seiten der rechteckigen Grundstruktur angeordnete seitliche Vertiefung zum Festlegen weiterer Wand-, Decken- oder Bodenelemente mittels separater, zumindest in die seitliche Vertiefung eingreifender Befestigungsteile.

Die Erfindung betrifft ferner ein Bauwerk, welches aus mehreren Wand- sowie gegebenenfalls Decken- und/oder Bodenelementen der vorgenannten Art zusammengesetzt ist, insbesondere in Form eines Gewächshauses oder eines Warmhauses oder Geheges für Pflanzen und/oder Tiere, sowie einen Bausatz zur Errichtung eines derartigen, aus mehreren Wand- sowie gegebenenfalls Decken- und/oder Bodenelementen mit einer von einem Rahmenprofil eingefassten Platte zusammengesetzten Bauwerks, insbesondere in Form eines Gewächshauses oder eines Warmhauses oder Geheges für Pflanzen und/oder Tiere, mit mehreren Wand- sowie gegebenenfalls Decken- und/oder Bodenelementen der vorgenannten Art.

Derartige bekannte Bauwerke in Form von Gewächshäusern, Warmhäusern oder Gehegen für Pflanzen und/oder Tiere, insbesondere für Kleintiere, wie Reptilien und Amphibien, Schildkröten, Nagetiere etc., sind vornehmlich aus mehreren vorgefertigten plattenförmigen Elementen unterschiedlicher Größe zusammengesetzt, welche entweder bereits herstellerseitig endmontiert sind (z.B. Terrarien oder Frühbeete) oder in Form eines Bausatzes angeboten werden, aus dessen Bauelemente das Bauwerk gemäß einer fest vorgegebenen Struktur montiert werden kann (z.B. Gewächshäuser). In beiden Fällen umfasst das Bauwerk zumindest Wandelemente sowie gegebenenfalls zusätzlich Decken- und/oder Bodenelemente, welche jeweils aus in der Regel aus Glas bestehenden Platten gebildet sind, die von einem Rahmenprofil eingefasst sind, welches eine U-förmige Nut zur Aufnahme der Platte aufweist und mittels dessen die Wand-, Decken- oder Bodenelemente miteinander verbunden werden können. Dies geschieht üblicherweise mittels Schrauben, Kleber oder anderen bekannten Befestigungsmitteln, welche die einzelnen Elemente lösbar oder unlösbar miteinander verbinden.

In vielen Fällen besteht der Bedarf an einer Erweiterung oder anderweitigen Umgestaltung bereits bestehender Bauwerke, z.B. bei der Tierhaltung an einer Errichtung eines zumindest mit Deckelementen abgedeckten warmen Frühbeetes zur Anzucht von Jungtieren, welches die erwachsenen Tiere von einem oben offenen Gehegebereich betreten können, oder bei der Pflanzenkultivierung an einer Erhöhung und/oder Verbreiterung des Gewächshauses, was bei gattungsgemäßen Bauwerken gemäß dem Stand der Technik bislang praktisch nicht möglich ist.

Die DE 297 06 994 U1 beschreibt einen Leichtbauträger mit einem zur Halterung eines Plattenelementes dienenden Rahmenprofil, welches eine rechteckige Grundstruktur mit je einer zentral an jeder Seite angeordneten Vertiefung aufweist. In der Vertiefung können die Plattenelemente mittels zusätzlicher Halteteile festgelegt werden. Die gemäß dieser Druckschrift nicht vorgesehene Errichtung eines modular aufgebauten Bauwerkes, wie insbesondere eines Warmhauses oder Geheges für Tiere und/oder Pflanzen, wäre hiermit - wenn überhaupt - nur bedingt möglich, da die Verbindungsmöglichkeiten mehrerer Leichbauträger untereinander begrenzt sind und zudem eine Mehrzahl an zusätzlichen Befestigungsmitteln, wie Spreizmittel, Spreizschrauben etc., erforderlich sind, welche einen Um- bzw. Ausbau der Konstruktion zumindest in erheblichem Maße erschweren.

Der DE 19 20 525 B2 ist eine zur Halterung von Wänden, Platten etc. dienende Profilschiene zu entnehmen, deren Querschnitt wiederum eine rechteckige Grundstruktur besitzt, welche sowohl im zentralen Bereich ihrer Seiten als auch in ihren Ecken mit Vertiefungen ausgestattet ist, welche die plattenförmigen Teile aufzunehmen vermögen. Die lediglich in die Profilschiene eingesteckten Platten sorgen indes nicht für eine stabile Verbindung zwischen den genannten Teilen, weshalb die Profilschiene vornehmlich zur kurzzeitigen Errichtung von Messestellwänden, Schaufensterdekorationen etc. vorgesehen ist. Ein zur Herstellung von Trennwänden in Baukonstruktionen und für Warengestelle vorgesehenes Gestell mit einer ähnlichen Profilschiene ist einerseits aus der DE 2 312 746 A1, andererseits aus der DE 25 53 628 A1 bekannt. Darüber hinaus beschreibt die DE 44 15 037 A1 eine Regalanordnung, welche ebenfalls eine Profilschiene umfasst, die einen etwa rechteckförmigen Querschnitt mit an zumindest einigen Ecken angeordneten, L-förmigen Ausnehmungen aufweist.

Der US 2006/0179788 A1 ist eine Rahmenstruktur für Wandelemente von Bauwerken gemäß dem Oberbegriff des Anspruchs 1 zu entnehmen. Die Wandelemente dienen insbesondere als Trennwände von Bürogebäuden, um größere Räume in einzelne Parzellen zu unterteilen. Die Rahmenstruktur umfasst ein Rahmenprofil für das jeweilige Wandelement, welches einen im Wesentlichen rechteckigen Querschnitt aufweist, welcher an seinen Ecken mit L-förmigen Ausnehmungen versehen sein kann, um die Wandelemente mittels zusätzlicher Befestigungsteile aufnehmen zu können. Darüber hinaus können die Profile mit zentralen, seitlichen Ausnehmungen ausgestattet sein, um hieran weitere Elemente, wie Standfüße, mittels weiterer Befestigungsteile festzulegen.

Der Erfindung liegt daher die Aufgabe zugrunde, ein Wand-, decken oder Bodenelement für ein aus solchen Elementen zusammensetzbares Bauwerk, ein aus mehreren solcher Elemente zusammengesetztes Bauwerk sowie einen Bausatz zur Errichtung eines solchen Bauwerks der eingangs genannten Art auf einfache und kostengünstige Weise dahingehend weiterzubilden, dass bei einer ansprechenden Optik sowie einer einwandfreien Eigenstabilität eines derartigen Bauwerkes eine hohe Modularität desselben unter Gewährleistung einer Vornahme von Umbauten, Erweiterungen etc. sichergestellt ist.

Erfindungsgemäß wird diese Aufgabe bei einem Wand-, Decken- oder Bodenelement der eingangs genannten Art dadurch gelöst, dass
- die L-förmige Ausnehmung des Querschnittes des Rahmenprofils im Bereich ihrer Aufnahmefläche, welche der in der L-förmigen Ausnehmung aufgenommenen Stirnseite der Platte zugewandt ist, eingeschnitten ist, um an dem Einschnitt eine im Wesentlichen L-förmige Befestigungsleiste der Platte festzulegen, so dass die L-förmige Aufnahme gemeinsam mit einem Schenkel der L-förmigen Befestigungsleiste eine U-förmige Aufnahmestruktur für die Platte bildet; und dass
- je eine im Eckbereich von wenigstens zwei Ecken der rechteckigen Grundstruktur des Querschnittes des Rahmenprofils angeordnete eckseitige Vertiefung zum Festlegen weiterer Wand-, Decken- oder Bodenelemente mittels separater, zumindest in die eckseitige Vertiefung eingreifender Befestigungsteile vorgesehen ist, wobei wenigstens diejenigen beiden Eckbereiche der rechteckigen Grundstruktur mit einer solchen eckseitigen Vertiefung ausgestattet sind, welche an den beiden Rändern derjenigen Seite der rechteckigen Grundstruktur angeordnet sind, welche parallel zur Stirnseite der in der L-förmigen Ausnehmung aufgenommenen Platte und entgegengesetzt zu dieser angeordnet ist.

Zur Lösung dieser Aufgabe sieht die Erfindung ferner ein aus mehreren solcher Wand- sowie gegebenenfalls Decken- und/oder Bodenelementen zusammengesetzten Bauwerk der eingangs genannten Art vor, wobei die Wand- sowie gegebenenfalls die Decken- und/oder Bodenelemente mittels separater Befestigungsteile, welche in die seitlichen und/oder in die eckseitigen Vertiefungen des Querschnittes des Rahmenprofils eingreifen, lösbar miteinander verbunden sind.

Schließlich sieht die Erfindung zur Lösung des ihr zugrunde liegenden Problems des Weiteren einen Bausatz zur Errichtung eines derartigen Bauwerks der eingangs genannten Art vor, mit mehreren Wand- sowie gegebenenfalls Decken- und/oder Bodenelementen der vorgenannten Art sowie mit separaten Befestigungsteilen, die in die seitlichen und/oder in die eckseitigen Vertiefungen des Querschnittes des Rahmenprofils einbringbar sind, um die Rahmenprofile lösbar miteinander zu verbinden.

Vorteilhafte Ausführungsformen der Erfindung sind in den abhängigen Ansprüchen wiedergegeben.

Die erfindungsgemäße Ausgestaltung stellt eine hohe Modularität des insbesondere in Form eines Gewächshauses oder eines Warmhauses oder Geheges für Pflanzen und/oder Tiere ausgestalteten Bauwerks sicher, indem das Rahmenprofil eine Vielzahl an Befestigungsmöglichkeiten, insbesondere mittels der separaten Befestigungsteile, der Wand-, Decken- und Bodenelemente bietet, aus welchen das Bauwerk zusammengesetzt ist. So lassen sich beispielsweise praktisch beliebige Grundrisse erzielen, indem die Rahmenprofile benachbarter Wandelemente eckseitig oder seitlich miteinander verbunden werden, oder es lassen sich durch Anordnung mehrere Wandelemente übereinander bereichsweise oder gänzlich unterschiedliche Höhen des Bauwerks bewerkstelligen, welche zudem durch entsprechende Deckenelemente gänzlich oder bereichsweise abgedeckt werden können. Die einzelnen Wand-, Decken- und Bodenelemente aus Rahmenprofil und Platte sind zudem insbesondere aufgrund der mit dem Einschnitt für die L-förmige Befestigungsleiste versehenen L-förmigen Ausnehmung zur Aufnahme der Platte einfach und kostengünstig herstellbar und bieten eine ansprechende Ästhetik, wobei vorgesehen werden kann, dass das Rahmenprofil praktisch mit der eingefassten Platte fluchtet, so dass eine weitestgehend ebene Außenfläche der Elemente erzielt werden kann.

Weitere Merkmale und Vorteile der Erfindung ergeben sich aus der nachfolgenden Beschreibung von gegenwärtig bevorzugten Ausführungsbeispielen unter Bezugnahme auf die Zeichnungen. Dabei zeigen:
- Fig. 1: eine Querschnittsansicht einer Ausführungsform eines Rahmenprofils zur Einfassung einer Platte unter Bildung eines Wand-, Decken- oder Bodenelementes;
- Fig. 2: eine Querschnittsansicht einer L-förmigen Befestigungsleiste, welche an der L-förmigen Ausnehmung des Rahmenprofils gemäß Fig. 1 rastend festlegbar ist;
- Fig. 3: eine Querschnittsansicht zweier Seite an Seite mittels separater Befestigungsteile miteinander verbundener Rahmenprofile gemäß Fig. 1;
- Fig. 4: eine gegenüber Fig. 3 vergrößert dargestellte Querschnittsansicht des einen Befestigungsteils gemäß Fig. 3;
- Fig. 5: eine gegenüber Fig. 3 vergrößert dargestellte Querschnittsansicht des anderen Befestigungsteils gemäß Fig. 3;
- Fig. 6: eine Querschnittsansicht zweier über Eck mittels separater Befestigungsteile miteinander verbundener Rahmenprofile gemäß Fig. 1;
- Fig. 7: eine gegenüber Fig. 6 vergrößert dargestellte Querschnittsansicht des einen Befestigungsteils gemäß Fig. 6;
- Fig. 8: eine gegenüber Fig. 6 vergrößert dargestellte Querschnittsansicht des anderen Befestigungsteils gemäß Fig. 6;
- Fig. 9: eine Querschnittsansicht dreier mittels Scharnier-Befestigungsteilen schwenkbar miteinander verbundener Rahmenprofile gemäß Fig. 1;
- Fig. 10: eine Querschnittsansicht dreier mittels L-förmiger Befestigungsteile miteinander verbundener Rahmenprofile gemäß Fig. 1;
- Fig. 11: einen Vertikalschnitt durch eine mögliche Dachkonstruktion eines Bauwerks unter Verwendung der Befestigungsteile gemäß Fig. 9 und 10;
- Fig. 12: einen Vertikalschnitt durch eine weitere mögliche Dachkonstruktion eines Bauwerks unter Verwendung nur der Befestigungsteile gemäß Fig. 10;
- Fig. 13: einen Horizontalschnitt durch einen einfachen Aufbau eines Bauwerks mit vier Wandelementen;
- Fig. 14: einen Horizontalschnitt durch einen gegenüber Fig. 13 erweiterten Aufbau eines Bauwerks mit sieben Wandelementen;
- Fig. 15: einen Horizontalschnitt durch einen alternativen erweiterten Aufbau eines Bauwerks; und
- Fig. 16: einen Horizontalschnitt durch einen weiteren alternativen Aufbau eines Bauwerks.

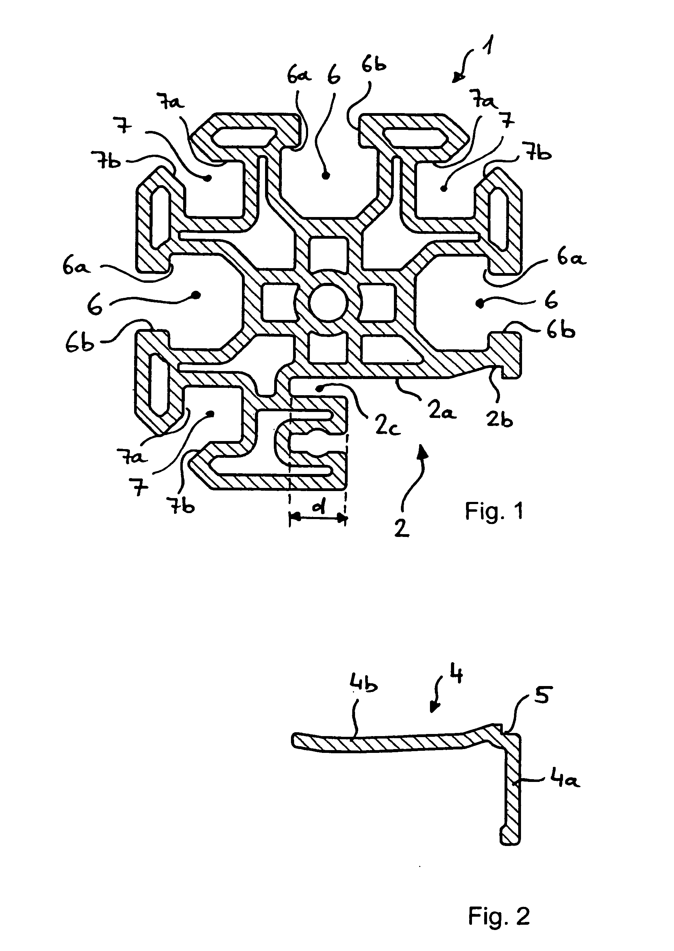

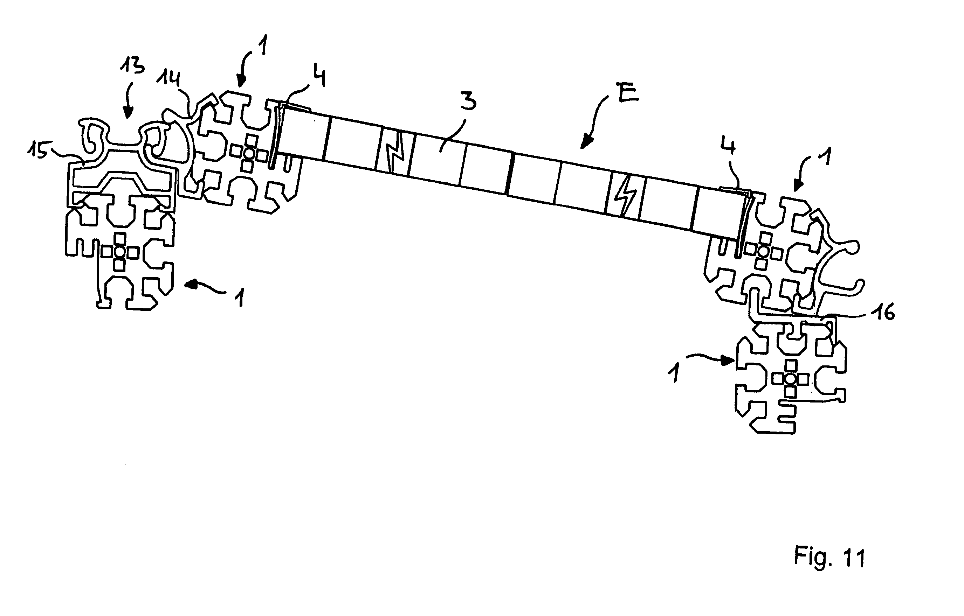

In Fig. 1 ist ein Querschnitt einer Ausführungsform eines Rahmenprofils 1 wiedergegeben, welches, wie weiter unten unter Bezugnahme auf Fig. 11 bis 16 noch näher erläutert, zur Einfassung einer Platte dient und mit dieser ein Wand-, Decken- oder Bodenelementen eines modular aus mehreren solcher Elemente zusammengesetzten Bauwerks dient, welches im vorliegenden Fall beispielsweise in Form eines Warmhauses für Kleintiere, wie Amphibien, Reptilien oder Kleinsäuger, z.B. Nagetiere, ausgestaltet ist.

Wie aus Fig. 1 ersichtlich, weist der Querschnitt des Rahmenprofils eine rechteckige - hier quadratische - Grundstruktur auf, an deren in Fig. 1 rechtem unteren Eck eine L-förmige Ausnehmung 2 ausgebildet ist. Letztere dient zur Aufnahme der in Fig. 1 nicht dargestellten Platte 3 (vgl. Fig. 11 ff) derart, dass die Platte 3 parallel zu einer der mit der L-förmigen Ausnehmung 2 versehenen, benachbarten - der in Fig. 1 rechten - Seite der quadratischen Grundstruktur an dieser festgelegt sein kann. Dies kann auf konstruktiv sehr einfache Weise z.B. dadurch geschehen, indem das Rahmenprofil vormontiert und die Platte von außen (von der in Fig. 1 rechten Seite) in die L-förmige Ausnehmung 2 eingeschoben wird. Die L-förmige Ausnehmung 2 des Querschnittes des Rahmenprofils 1 erstreckt sich im vorliegenden Fall nur bis in den zentralen Bereich der quadratischen Grundstruktur, so dass die Platte 3 (Fig. 11 ff) exzentrisch in Bezug auf die quadratische Grundstruktur in der L-förmigen Ausnehmung 2 aufgenommen ist, wodurch eine etwa fluchtende Anordnung der Platte 3 mit der in Fig. 1 rechten (Außen)seite des Rahmenprofilquerschnittes möglich ist. Die L-förmige Ausnehmung 2 ist dabei z.B. im Bereich des äußeren (in Fig. 1 rechten) Endes ihrer Aufnahmefläche 2a, welche der in der L-förmigen Ausnehmung 2 aufgenommenen Stirnseite der Platte 3 zugewandt ist (vgl. Fig. 11 ff), hinterschnitten (beim vorliegenden Ausführungsbeispiel in Form einer etwa hakenförmigen Vertiefung 2b), wobei diese Aufnahmefläche 2a der L-förmigen Ausnehmung 2 im Bereich ihres inneren (in Fig. 1 linken) Endes ferner in einer Vertiefung 2c endet, welche die in der L-förmigen Aufnahme 2 aufgenommene Stirnseite der Platte 3 um einen Abstand d übertrifft. Der Hinterschnitt 2b dient gemeinsam mit der Vertiefung 2c zum rastenden Festlegen einer in Fig. 2 im Querschnitt dargestellten, im Wesentlichen L-förmigen Befestigungsleiste der Platte 3, so dass die L-förmige Aufnahme 2 gemeinsam mit einem Schenkel 4a der L-förmigen Befestigungsleiste 4 eine U-förmige Aufnahmestruktur für die Platte 3 bildet und dies nach Einrasten der Befestigungsleiste 4 an der Ausnehmung 4 unverlierbar hält. Der andere Schenkel 4b der Befestigungsleiste 4 ist hinsichtlich seiner Länge an die Aufnahmefläche 2a einschließlich der Vertiefung 2c der L-förmigen Ausnehmung 2 in dem Rahmenprofilquerschnitt angepasst, wobei er an seiner dem Schenkel 4a abgewandten Seite einen zu dem Hinterschnitt 2b etwa komplementäre Rastvorsprung 5 besitzt. Der Hinterschnitt 2b bzw. der Rastvorsprung kann indes selbstverständlich auch an anderer Stelle, z.B. innerhalb der Vertiefung 2c bzw. im Bereich des freien Endes des Schenkels 4b vorgesehen sein, sofern die Haltefunktion der Platte 3 (Fig. 11 ff) in der L-förmigen Ausnehmung des Rahmenprofilquerschnittes erfüllt ist. Die L-förmige Befestigungsleiste 4 kann sich im Übrigen vorzugsweise um den gesamten Umfang des Rahmenprofils 1 bzw. der von diesem eingefassten Platte herum erstrecken, d.h. die Länge der jeweiligen Befestigungsleiste 4 entspricht etwa der Länge des jeweiligen Rahmenprofils 1.

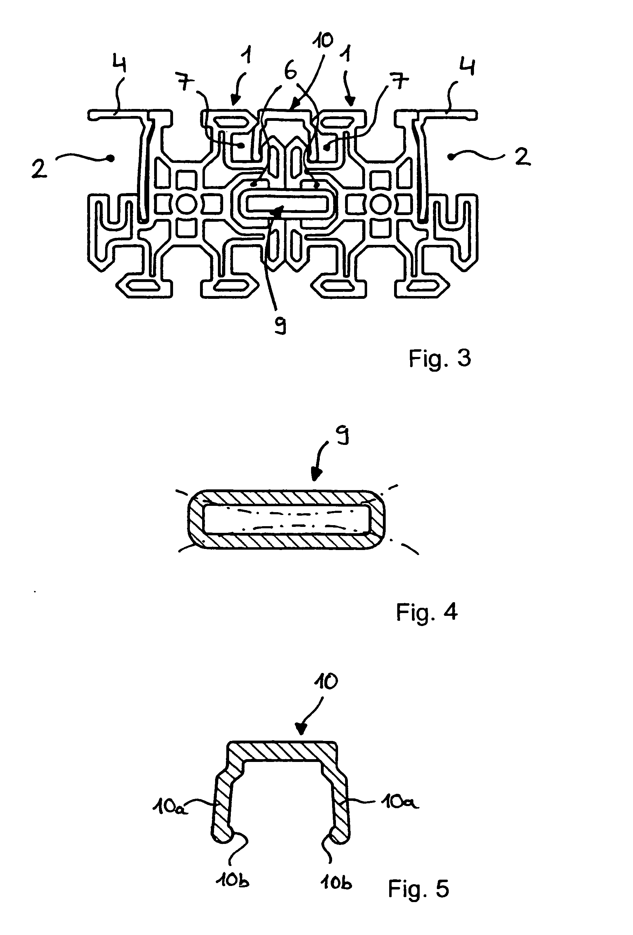

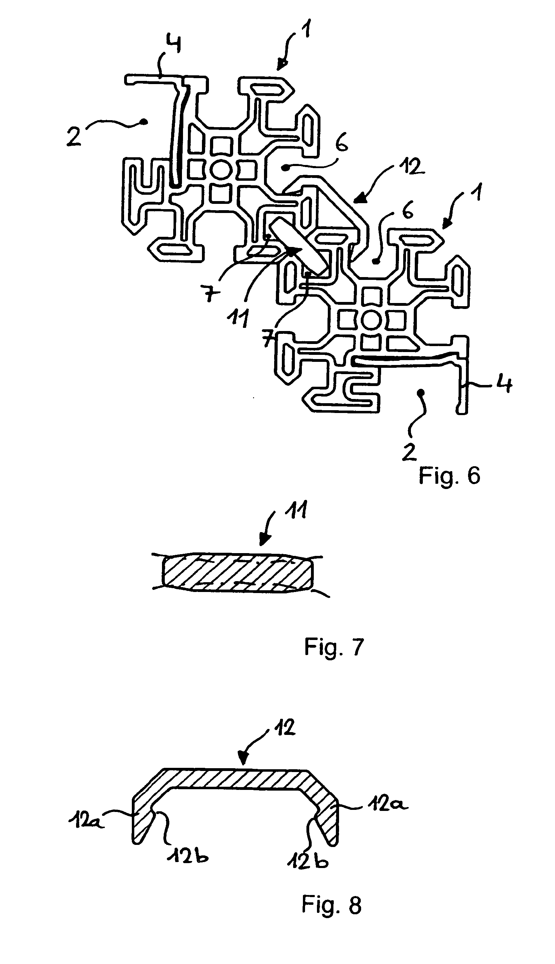

Wie wiederum der Fig. 1 zu entnehmen ist, umfasst die quadratische Grundstruktur des Rahmenprofilquerschnittes ferner im zentralen Bereich von drei ihrer Seiten angeordnete seitliche Vertiefungen 6 zum Festlegen der Rahmenprofile 1 weiterer Wand-, Decken- oder Bodenelemente mittels separater, in die Vertiefungen 6 eingreifender Befestigungsteile (vgl. insbesondere Fig. 3 bis 5). Die Vertiefungen 6 sind hierbei insbesondere einerseits an den beiden - in Fig. 1 oberen und linken - Seiten der quadratischen Grundstruktur, welche nicht an die L-förmige Vertiefung 2 angrenzen, andererseits an der einen an die L-förmige Vertiefung angrenzenden - in Fig. 1 rechten - Seite der quadratischen Grundstruktur angeordnet, welche an die Stirnseite der in der L-förmigen Vertiefung 2 aufgenommenen Platte 3 (Fig. 11 ff) angrenzt. Darüber hinaus umfasst die quadratische Grundstruktur des Rahmenprofilquerschnittes zumindest je eine im Eckbereich von wenigstens zwei Ecken der quadratischen Grundstruktur angeordnete eckseitige Vertiefung 7 zum Festlegen der Rahmenprofile 1 weiterer Wand-, Decken- oder Bodenelemente mittels separater, in die Vertiefungen 7 eingreifender Befestigungsteile (vgl. insbesondere Fig. 6 bis 8), wobei wenigstens diejenigen beiden - in Fig. 1 oberen - Eckbereiche der rechteckigen Grundstruktur mit einer solchen eckseitigen Vertiefung 7 ausgestattet sind, welche an den beiden Rändern derjenigen - in Fig. 1 oberen - Seite der rechteckigen Grundstruktur angeordnet sind, welche parallel zur Stirnseite der in der L-förmigen Ausnehmung 2 aufgenommenen Platte 3 und entgegengesetzt zu dieser angeordnet ist. Beim vorliegenden Ausführungsbeispiel ist zusätzlich eine dritte eckseitige Vertiefung 7 (in Fig. 1 links unten) vorgesehen, so dass mit Ausnahme des mit der L-förmigen Ausnehmung 2 versehenen Eckbereichs alle Ecken der quadratischen Grundstruktur mit einer solchen eckseitigen Vertiefung 7 ausgestattet sind. Alle drei mit den eckseitigen Vertiefungen 7 ausgestatteten Ecken der quadratischen Grundstruktur des Rahmenprofilquerschnittes besitzen dabei eine unter 45° in Bezug auf die Seiten der quadratischen Grundstruktur abgeschrägte Außenkante, um für eine hinreichende Kontaktfläche der eckseitig miteinander verbundenen Rahmenprofile zweier benachbarter Wand-, Decken- oder Bodenelemente zu sorgen (vgl. insbesondere auch Fig. 6).

Sowohl die seitlichen 6 als auch die eckseitigen Vertiefungen 7 des Rahmenprofilquerschnittes sind hinterschnitten ausgebildet, um die nachfolgend unter Bezugnahme auf 3 bis 10 näher erläuterten, separaten Befestigungsteile hieran rastend festlegen zu können. Der mit dem Bezugszeichen 6a bzw. 7a versehene Hinterschnitt ist dabei jeweils vorzugsweise jeweils derart ausgestaltet, dass die jeweilige Vertiefung 6, 7 einen zentralen Hohlraum aufweist, welcher über einen zentralen Kanal 6b, 7b mit demgegenüber geringerem Querschnitt mit der Umgebung in Verbindung steht, wobei der Hinterschnitt 6a, 7b einen vorzugsweise etwa stufenförmigen Übergang zwischen dem Kanal 6b, 7b und dem zentralen Hohlraum darstellt. Der Kanal 6b, 7b ist dabei insbesondere etwa senkrecht zu den Außenflächen der quadratischen Grundstruktur des Rahmenprofilquerschnittes - bzw. genauer: senkrecht zu den Seiten des Quadrates sowie zu dessen unter 45° abgeschrägten Eckseiten - angeordnet, um, wie nachfolgend noch näher erläutert, die Rahmenprofile 1 zweier Wand-, Boden- und/oder Deckenelemente mittels separater Befestigungsteile, welche rastend an den Vertiefungen 6, 7 festlegbar sind, aneinander befestigen zu können. Indes ist es selbstverständlich auch möglich, an den Vertiefungen 6, 7 andere Gegenstände, wie z.B. Luftbefeuchter, Thermometer, Heizeinrichtungen etc. im Falle eines Gewächs- oder Warmhauses, Terrariums oder dergleichen, lösbar zu befestigen, was mittels der nachfolgend beschriebenen Befestigungsteile oder auch durch andere Mittel, wie beispielsweise Hammerkopfschrauben, geschehen kann.

Wie aus Fig. 3 ersichtlich, ist eine lösbare Befestigung zweier Rahmenprofile 1 gemäß Fig. 1 seitlich zueinander z.B. durch im Detail in Fig. 4 und 5 wiedergegebene Befestigungsteile 9, 10 möglich, welche einerseits in zwei deckungsgleich angeordnete seitliche Vertiefungen 6 des Rahmenprofilquerschnittes, andererseits in benachbart angeordnete eckseitige Vertiefungen 7 desselben eingreifen.

Wie insbesondere der Fig. 4 zu entnehmen ist, sind beim vorliegenden Ausführungsbeispiel hierbei einerseits im Wesentlichen bolzenförmige Befestigungsteile 9 vorgesehen sind, welche in die benachbarten seitlichen Vertiefungen 6 des jeweiligen Querschnittes der beiden Rahmenprofile 1 (Fig. 3) eingreifen, um diese miteinander zu verbinden. Die bolzenförmigen Befestigungsteile 9 sind dabei vorzugsweise zumindest in Radialrichtung elastisch ausgebildet sind, wie es in Fig. 4 mit den beiden Strichpunktlinien angedeutet ist, wobei ihr Querschnitt weiterhin vorzugsweise geringfügig größer ist als der kleinste Querschnitt der entsprechenden Vertiefungen 6 des Querschnittes des Rahmenprofils, d.h. hier dem Querschnitt des Kanals 6b, so dass sie beim Einführen in die Vertiefung 6 zumindest geringfügig komprimiert werden und somit einen Widerstand gegen ein Lösen einer solchen Verbindung bilden. Die Elastizität kann dabei ausschließlich durch entsprechende Form und Materialauswahl des bolzenförmigen Befestigungsteils gewährleistet sein (vgl. hierzu auch Fig. 7), oder das bolzenförmige Befestigungsteil 9 ist z.B. in Form eines Hohlkörpers ausgebildet, wie es im Falle der Fig. 4 gezeigt ist.

Alternativ oder zusätzlich sind beim vorliegenden Ausführungsbeispiel andererseits im Wesentlichen klammerförmige Befestigungsteile 10 mit etwa U-förmigem Querschnitt vorgesehen (Fig. 5), deren U-Schenkel 10a in benachbarte eckseitige Vertiefungen 7 des jeweiligen Querschnittes der beiden Rahmenprofile 1 eingreifen, um diese miteinander zu verbinden. Die klammerförmigen Befestigungsteile 10 sind gleichfalls vorzugsweise materialbedingt mit einer gewissen Elastizität ausgebildet, so dass ihre U-Schenkel 10a nach außen aufspreizbar sind und nach Einführen in die Vertiefungen 6 und mit Andruck der U-Schenkel 10a in Richtung des jeweils anderen U-Schenkels 10a gegen die Innenwand der Vertiefungen 7 anliegen. Die klammerförmigen Befestigungsteile 10 weisen dabei zweckmäßig im Endbereich ihrer U-Schenkel 10a einander zugewandte Rastnasen 10b zum rastenden Eingriff unter den Hinterschnitt 7a der entsprechenden Vertiefungen 7 des Querschnittes des Rahmenprofils 1 aufweisen. In diesem Zusammenhang sei darauf hingewiesen, dass selbstverständlich auch die bolzenförmigen Befestigungsteile 9 einen entsprechenden Hinterschnitt (nicht gezeigt) zum rastenden Eingriff unter den Hinterschnitt 6a der Vertiefungen 6 besitzen können, beispielsweise in Form verdickter Endabschnitte oder Umfangswülsten.

Fig. 6 zeigt eine Verbindung zweier Rahmenprofile 1 gemäß Fig. 1 über Eck durch im Detail in Fig. 7 und 8 wiedergegebene Befestigungsteile 11, 12, welche einerseits in zwei deckungsgleich angeordnete eckseitige Vertiefungen 7 des Rahmenprofilquerschnittes, andererseits in benachbart angeordnete seitliche Vertiefungen 6 desselben eingreifen. Bei den Befestigungsteilen 11, 12 handelt es sich wiederum einerseits um im Wesentlichen bolzenförmige Befestigungsteile 11 (Fig. 7), andererseits um im Wesentlichen klammerförmige Befestigungsteile 12 (Fig. 8) mit U-Schenkeln 12a und Rastnasen 12b an den einander zugewandten Endbereichten der U-Schenkel 12. Die zur eckseitigen Verbindung zweier Rahenprofile 1 dienenden Befestigungsteile 11, 12 entsprechen weitestgehend den zur seitlichen Verbindung zweier Rahmenprofile 1 vorgesehenen Befestigungsteilen gemäß Fig. 4 und 5, wobei sie hinsichtlich ihrer Abmessungen an die durch die Anordnung der zu verbindenden Rahmenprofile 1 vorgegebene Geometrie angepasst sind.

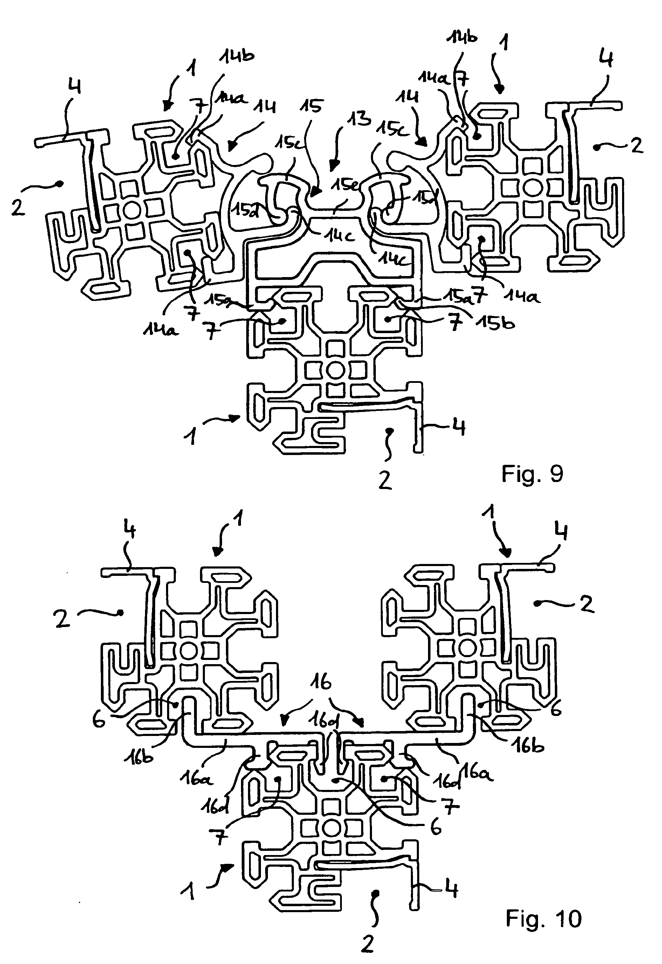

Wie insbesondere aus Fig. 9 ersichtlich, sind bei dem dargestellten Ausführungsbeispiel des Weiteren Scharnier-Befestigungsteile 13 vorgesehen, welche jeweils einen an einem benachbarten Rahmenprofil 1 - wiederum an den Vertiefungen 6 und/oder 7 des Rahmenprofilquerschnittes - festgelegten Scharnierabschnitt 14, 15 aufweisen. Solche Scharnier-Befestigungsteile 13 können beispielsweise dazu dienen, benachbarte Wand-, Decken- oder Bodenelemente schwenkbar miteinander zu verbinden, um auf diese Weise schwenkbare Klappen bzw. Türen auszubilden. Die beiden Scharnierabschnitte 14, 15 der Scharnier-Befestigungsteile 13 besitzen jeweils zwei Befestigungsabschnitte 14a, 15a zum lösbaren Eingriff in benachbarte Vertiefungen 7, 6 des Querschnittes des Rahmenprofils 1, wobei sie im vorliegenden Fall an zwei benachbarten eckseitigen Vertiefungen 7 des jeweiligen Rahmenprofilquerschnittes rastend befestigbar sind, es aber selbstverständlich gleichfalls möglich ist, die Befestigungsabschnitte 14a, 15a derart auszubilden, dass sie in die seitlichen 6 oder sowohl in seitliche 6 als auch in eckseitige Vertiefungen 7 des Rahmenprofilquerschnittes eingreifen. Die Befestigungsabschnitte 14a, 15a der Scharnierabschnitte 14, 15 der Scharnier-Befestigungsteile 13 sind hierzu im Wesentlichen in Form von U-Schenkeln ausgestaltet, deren Abstand an den Abstand der Vertiefungen 6, 7 des Rahmenprofilquerschnittes angepasst ist, an welchen sie lösbar festgelegt werden sollen. Sie besitzen wiederum vorzugsweise in ihrem Endbereich einander zugewandte Rastnasen 14b, 15b zum Eingriff unter den Hinterschnitt 6a, 7a oder in den Kanal 6b 7b der entsprechenden Vertiefungen 6, 7 (vgl. Fig. 1) des Querschnittes des Rahmenprofils 1, wodurch ihnen eine etwa hakenförmige Gestalt verliehen ist. Zumindest die Befestigungsabschnitte 14a, 15a der Scharnierabschnitte 14, 15 der Scharnier-Befestigungsteile 13 sind wiederum mit einer gewissen Elastizität ausgebildet, so dass ihre U-Schenkel nach außen aufspreizbar sind und nach Einführen in die Vertiefungen 7 und mit Andruck der U-Schenkel in Richtung des jeweils anderen U-Schenkels gegen die Innenwand der Vertiefungen 7 - bzw. genauer: gegen den Hinterschnitt 7a oder den Kanal 7b (Fig. 1) - anliegen, wobei ihre Rastnasen 14b, 15b hieran verrasten. Der Scharnierabschnitt 15 der Scharnier-Befestigungsteile 13 weist beispielsweise wenigstens eine - hier zwei - im Wesentlichen U-förmige Aufnahmen 15c auf, welche z.B. einen verdickten Endabschnitt 15d besitzen und in welchen jeweils ein ebenfalls verdickter Endabschnitt 14c des anderen Scharnierabschnittes 14 derart aufgenommen ist, dass die beiden Scharnierabschnitte 14, 15 schwenkbar aneinander gelagert sind. Der U-Steg der jeweiligen U-förmigen Aufnahme 15c des Scharnierabschnittes 15 oder - sofern, wie im vorliegenden Fall vorgesehen, der Scharnierabschnitt 15 zwei Scharnierlager umfasst - ein Verbindungssteg 15e zwischen den U-förmigen Aufnahmen 15c kann als Anschlag des jeweiligen Scharnierteils 14 in der (nicht dargestellten) Öffnungsstellung und somit zur Begrenzung des Öffnungswinkels dienen.

Wie bereits angedeutet, eignet sich das Scharnier-Befestigungsteil 13 auch z.B. zur schwenkbaren Lagerung des Rahmenprofils 1 eines nach oben aufklappbaren Deckenelementes E an dem Rahmenprofil 1 an einem weiteren, z.B. an einem Wandelement, wie es der Fig. 11 (links) zu entnehmen ist. Dabei sei darauf hingewiesen, dass die Ausgestaltung des Scharnier-Befestigungsteils 13 für eine Flüssigkeitsdichtigkeit sorgt, so dass der von dem Deckenelement E abgedeckte Abschnitt des modularen Bauwerks z.B. vor Regen geschützt ist.

Wie sich aus Fig. 10 ergibt, sind beim vorliegenden Ausführungsbeispiel ferner im Wesentlichen L-förmige Befestigungsteile 16 vorgesehen, welche zwei an einer Seite des L-Schenkels 16a, entgegen dem anderen L-Schenkel 16b von diesem vorstehende Befestigungsabschnitte 16d zum Eingriff in benachbarte seitliche 6 und eckseitige Vertiefungen 7 des Querschnittes des Rahmenprofils 1 aufweisen. Zumindest die Befestigungsabschnitte 16d der L-förmigen Befestigungsteile 16 sind aus den oben genannten Gründen wiederum vorzugsweise elastisch ausgebildet und in ihrem Endbereich jeweils mit einander zugewandte Rastnasen zum Eingriff unter den Hinterschnitt 6a, 7a oder in den Kanal 6b, 7b (vgl. Fig. 1) der entsprechenden Vertiefungen 6, 7 des Rahmenprofilquerschnittes ausgebildet. Die den Befestigungsabschnitten 16d abgekehrte, in Fig. 10 obere Seite des L-Schenkels 16a kann insbesondere als Auflagefläche für ein z.B. an einem Scharnier-Befestigungsteil 13 klappbares Element dienen, dessen Rahmenprofil 1 im geschlossenen Zustand auf dieser Fläche aufliegt. Der in Fig. 10 nach oben vorstehende L-Schenkel 16b greift dabei vorzugsweise - z.B. lediglich lose - in die zentrale Vertiefung 6 des aufliegenden Rahmenprofils 1, so dass auch eine solche Ausgestaltung für eine einwandfreie Feuchtigkeitsdichtigkeit sorgt. Eine solche Konstruktion ist in Fig. 11 (rechts) wiedergegeben, bei welcher das an dem Scharnier-Befestigungsteil 13 links schwenkbar gelagerte Deckenelement E auf dem L-förmigen Befestigungsteil aufliegt.

Dem Fachmann ist offensichtlich, dass der Ausgestaltung der Befestigungsteile praktisch keine Grenzen gesetzt sind, um die erfindungsgemäßen Rahmenprofile 1 unter Eingriff in ihre seitlichen 6 und/oder eckseitigen Vertiefungen 7 auch auf andere Weise lösbar miteinander zu verbinden als vorliegend beschrieben. In jedem Fall ermöglicht das Rahmenprofil 1 der Wand-, Decken- oder Bodenelemente einen praktisch beliebigen, variablen Aufbau eines modular hieraus zusammengesetzten Bauwerks, wobei je nach - starrer oder schwenkbarer - Verbindung der Rahmenprofile 1 miteinander verschiedeneckige Grundrisse mit oder ohne Trennwänden, verschiedene Höhen (z.B. durch Befestigung von zwei oder mehreren Wandelementen übereinander mit oder ohne Zwischenböden) sowie bereichsweise oder gänzliche Abdeckungen des Bauwerks erzielt werden können.

Von den von den Rahmenprofilen 1 eingefassten Platten 3 können insbesondere im Falle von Gewächshäusern, Warmhäusern, Terrarien, Frühbeeten etc. wenigstens einige zweckmäßig zumindest lichtdurchlässig, vorzugsweise transparent, sein, wobei sie beispielsweise aus Glas oder Acrylglas gebildet sein können. Selbstverständlich können zumindest einige der Platten 3 grundsätzlich auch aus beliebigen anderen Materialien, wie Kunststoff, Metall, Holz oder dergleichen, gebildet sein, was dann zweckmäßig sein kann, wenn Teile des Bauwerks abgedunkelt sein sollen, z.B. um Bereiche vorzusehen, in welchen erwachsene Tiere ungestört ihre Jungtiere aufziehen können.

Das Rahmenprofil 1 kann in vorteilhafter Ausgestaltung insbesondere aus fertigungstechnischen Gründen von einem Strangpressprofil gebildet sein, wobei das Rahmenprofil 1 vorzugsweise aus Kunststoff, insbesondere aus einem thermoplastischen Kunststoff, oder Metall, insbesondere Aluminium oder einer Aluminiumlegierung, gebildet sein kann. Indes sind auch den Materialien für das Rahmenprofil 1 grundsätzlich keine Grenzen gesetzt. Entsprechendes gilt sowohl für die L-förmige Befestigungsleiste 2 der Platten 3 in der L-förmigen Ausnehmung 2 des Rahmenprofilauerschnittes als auch für die Befestigungsteile 9-16, wobei die genannten Teile vorzugsweise aus Kunststoff, insbesondere aus einem thermoplastischen Kunststoff, gebildet sein können, welcher auch für die in bevorzugter Ausgestaltung vorgesehene Elastizität der Befestigungsteile 9-16 sorgt. Die Befestigungsteile 9-16 können sich ferner jeweils über die gesamte Länge der durch sie geschaffenen Verbindung zwischen zwei Rahmenprofilen 1 erstrecken (also über die gesamte Länge bzw. Breite zweier miteinander verbundener Rahmenprofile 1), oder die Befestigungsteile 9-16 können auch demgegenüber deutlich kürzer sein, um zwei Rahmenprofile 1 lediglich lokal, z.B. an mehreren Punkten entlang einer Verbindungsstelle derselben, aneinander zu befestigen.

Die aus den von den durch die Rahmenprofile 1 eingefassten Platten 3 gebildeten Wand-, Boden- und/oder Deckenelemente E eines Bauwerks oder eines Bausatzes für ein solches Bauwerk können selbstverständlich auch mit unterschiedlichen Formaten ausgebildet sein, wobei z.B. verschiedenformatige Elemente mit regelmäßiger Längen- (L) und/oder Breitenabstufung (B) vorgesehen sein können, wie L x B, 2L x B, 3L x B, L x 2B, L x 3B etc., wobei die vorstehenden Faktoren nicht notwendigerweise ganzzahlig sein müssen.

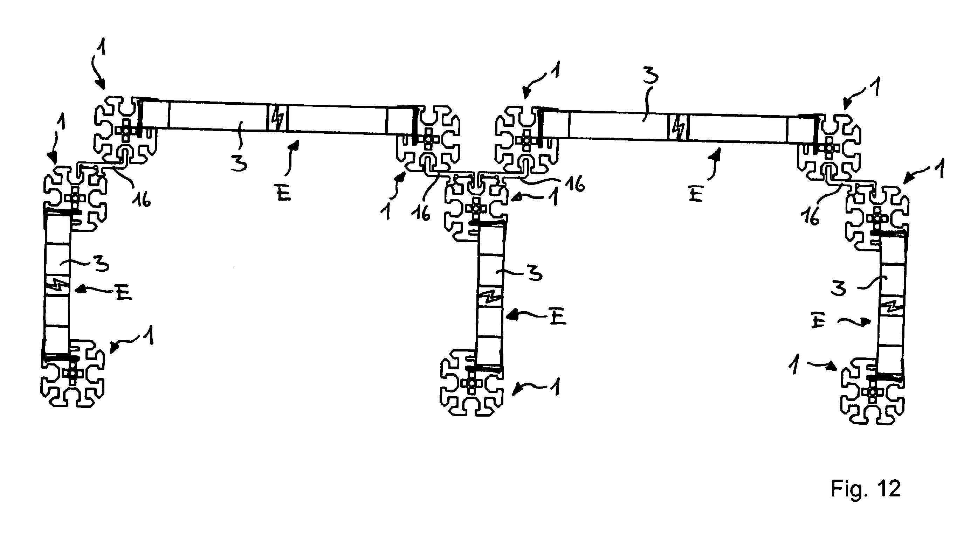

In Fig. 12 bis 16 sind rein exemplarisch einige mögliche einfache Aufbauten eines aus mehreren, jeweils aus einer von einem Rahmenprofil 1 gemäß Fig. 1 eingefassten Platte 3 gebildeten Wand-, Decken- und/oder Bodenelementen E wiedergegeben, welche mittels verschiedener Befestigungsteile der vorbeschriebenen Art miteinander verbunden sind.

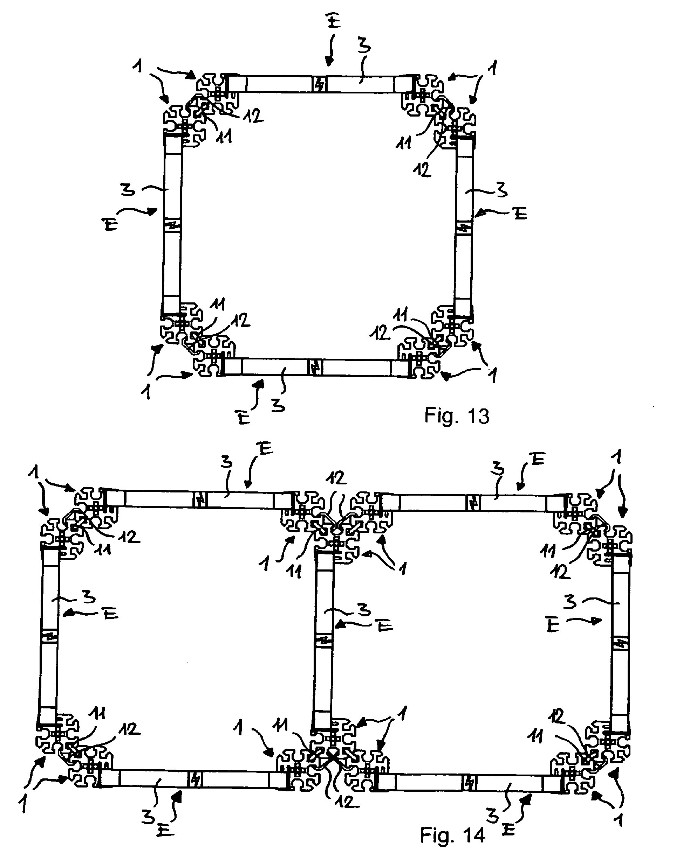

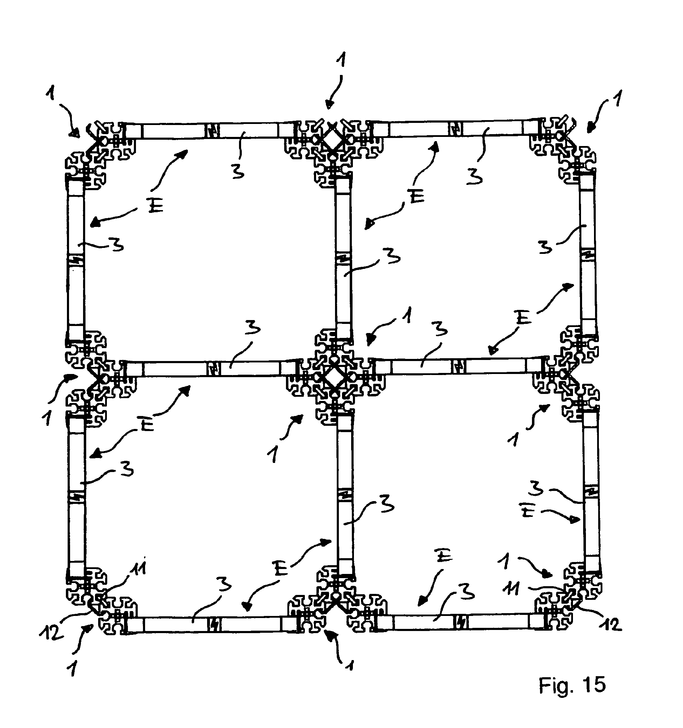

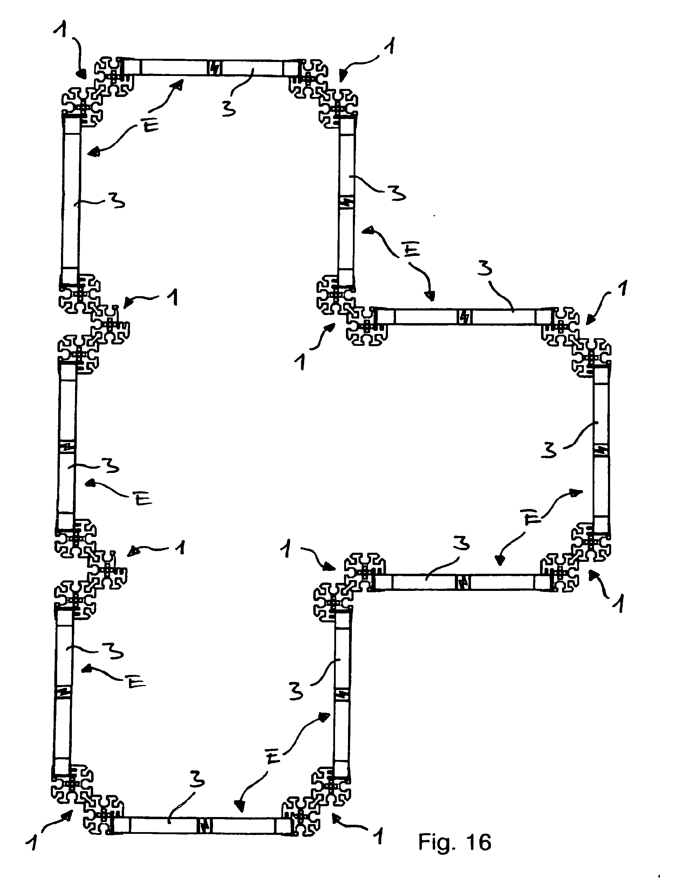

So zeigt z.B. Fig. 12 einen Vertikalschnitt durch ein aus Bauwerk mit zwei äußeren Wandelementen E und einem mittleren, z.B. als Trennwand dienenden Wandelement E, wobei das Bauwerk von einer Dachkonstruktion abgedeckt sind, welche zwei Deckenelemente E umfasst, die unter Verwendung der vorstehend unter Bezugnahme auf Fig. 10 erläuterten, L-förmigen Befestigungsteile 16 lose, aber wasserdicht auf den Wandelementen E aufliegen. Ein Horizontalschnitt durch ein solches Bauwerk kann beispielsweise in der in Fig. 14 gezeigten Weise ausgestaltet sein, wobei die einzelnen Wandelemente E mittels der Befestigungsteile 11, 12 gemäß Fig. 6 bis 8, welche in die Vertiefungen 6, 7 des Querschnittes deren Rahmenprofile 1 eingreifen, jeweils eckseitig miteinander verbunden sind. In Fig. 13 ist die einfachste Form eines solchen Bauwerks in einem der Fig. 14 entsprechenden Horizontalschnitt dargestellt, welches lediglich vier Wandelemente E umfasst, die den Grundriss des Bauwerks definieren. Ein weiterer dementsprechender Horizontalschnitt eines Bauwerks, welches aus vier Einheiten gemäß Fig. 13 bzw. zwei Einheiten gemäß Fig. 14 gebildet ist, ist in Fig. 15 gezeigt, wobei die Einheiten wiederum - wenn auch nicht notwendigerweise - durch innenseitig angeordnete Wandelemente E voneinander getrennt sind. Fig. 16 zeigt schließlich exemplarisch einen weiteren Horizontalschnitt durch ein ohne Zwischenwände ausgebildetes Bauwerk mit denselben Wandelementen E, welche zu einem etwa T-förmigen Grundriss zusammengefügt worden sind, wobei die Befestigungsteile in Fig. 16 nicht nochmals zeichnerisch dargestellt sind.

Wie bereits erwähnt, lassen sich aufgrund der modularen Ausgestaltung eines erfindungsgemäßen Bauwerks beliebige andere Formen desselben erzielen, ohne dass hierfür eine Modifikation des Aufbaus der Wand-, Decken- oder Bodenelemente erforderlich wäre.

## Patentansprüche

1. Wand-, Decken- oder Bodenelement (E) für ein aus solchen Elementen (E) zusammensetzbares Bauwerk, insbesondere in Form eines Gewächshauses oder eines Warmhauses oder Geheges für Pflanzen und/oder Tiere, wobei das Wand-, Decken- oder Bodenelement (E) eine von einem Rahmenprofil (1) eingefasste Platte (3) aufweist und wobei das Rahmenprofil (1) einen Querschnitt aufweist, welcher umfasst:
- eine rechteckige Grundstruktur;
- eine L-förmige Ausnehmung (2) im Bereich einer der Ecken der rechteckigen Grundstruktur zur Aufnahme der Platte (3) derart, dass die Platte (3) parallel zu einer der mit der L-förmigen Ausnehmung (2) versehenen, dieser benachbarten Seiten der rechteckigen Grundstruktur an dieser festgelegt ist; und
- je eine im zentralen Bereich von wenigstens drei Seiten der rechteckigen Grundstruktur angeordnete seitliche Vertiefung (6) zum Festlegen weiterer Wand-, Decken- oder Bodenelemente (E) mittels separater, zumindest in die seitliche Vertiefung (6) eingreifender Befestigungsteile (9, 12, 16),
**dadurch gekennzeichnet, dass**
- die L-förmige Ausnehmung (2) des Querschnittes des Rahmenprofils (1) im Bereich ihrer Aufnahmefläche (2a), welche der in der L-förmigen Ausnehmung (2) aufgenommenen Stirnseite der Platte (3) zugewandt ist, einen Hinterschnitt (2b) hat, um an dem Hinterschnitt (2b) eine im Wesentlichen L-förmige Befestigungsleiste (4) der Platte (3) festzulegen, so dass die L-förmige Aufnahme (2) gemeinsam mit einem Schenkel (4a) der L-förmigen Befestigungsleiste (4) eine U-förmige Aufnahmestruktur für die Platte (3) bildet; und dass
- je eine im Eckbereich von wenigstens zwei Ecken der rechteckigen Grundstruktur des Querschnittes des Rahmenprofils (1) angeordnete eckseitige Vertiefung (7) zum Festlegen weiterer Wand-, Decken- oder Bodenelemente (E) mittels separater, zumindest in die eckseitige Vertiefung (7) eingreifender Befestigungsteile (10, 11, 13-16) vorgesehen ist, wobei wenigstens diejenigen beiden Eckbereiche der rechteckigen Grundstruktur mit einer solchen eckseitigen Vertiefung (7) ausgestattet sind, welche an den beiden Rändern derjenigen Seite der rechteckigen Grundstruktur angeordnet sind, welche parallel zur Stirnseite der in der L-förmigen Ausnehmung (2) aufgenommenen Platte (3) und entgegengesetzt zu dieser angeordnet ist.

2. Wand-, Decken- oder Bodenelement nach Anspruch 1, **dadurch gekennzeichnet, dass** die im Wesentlichen L-förmige Befestigungsleiste (4) der Platte (3) rastend an Hinterschnitt (2b) der L-förmigen Ausnehmung (2) festlegbar ist.

3. Wand-, Decken- oder Bodenelement nach Anspruch 1 oder 2, **dadurch gekennzeichnet, dass** die rechteckige Grundstruktur des Querschnittes des Rahmenprofils (1) quadratisch ist.

4. Wand-, Decken- oder Bodenelement nach einem der Ansprüche 1 bis 3, **dadurch gekennzeichnet, dass** sich die L-förmige Ausnehmung (2) des Querschnittes des Rahmenprofils (1) nur bis in den zentralen Bereich der rechteckigen Grundstruktur erstreckt, so dass die Platte (3) exzentrisch in Bezug auf die rechteckige Grundstruktur in der L-förmigen Ausnehmung (2) aufgenommen ist.

5. Wand-, Decken- oder Bodenelement nach einem der Ansprüche 1 bis 4, **dadurch gekennzeichnet, dass** die Platte (3) derart in der L-förmigen Ausnehmung (2) aufgenommen ist, dass ihre Außenfläche im Wesentlichen mit einer Seite der rechteckigen Grundstruktur des Querschnittes des Rahmenprofils (1) fluchtet.

6. Wand-, Decken- oder Bodenelement nach einem der Ansprüche 1 bis 5, **dadurch gekennzeichnet, dass** die Aufnahmefläche (2a) der L-förmigen Ausnehmung (2), welche der in der L-förmigen Ausnehmung (2) aufgenommenen Stirnseite der Platte (3) zugewandt ist, im Bereich ihres inneren Endes ferner in einer Vertiefung (2c) endet, welche die in der L-förmigen Aufnahme (2) aufgenommene Stirnseite der Platte (3) übertrifft, um die im Wesentlichen L-förmige Befestigungsleiste (4) der Platte (3), an dem Hinterschnitt (2b) und an der Vertiefung (2c) festzulegen.

7. Wand-, Decken- oder Bodenelement nach einem der Ansprüche 1 bis 6, **dadurch gekennzeichnet, dass** der Querschnitt des Rahmenprofils (1) drei im Eckbereich der rechteckigen Grundstruktur angeordnete eckseitige Vertiefungen (7) zum Festlegen weiterer Wand-, Decken- oder Bodenelemente (E) mittels separater, zumindest in die eckseitige Vertiefung (7) eingreifender Befestigungsteile (10, 11, 13-16) aufweist.

8. Wand-, Decken- oder Bodenelement nach einem der Ansprüche 1 bis 7, **dadurch gekennzeichnet, dass** die im zentralen Bereich von wenigstens drei Seiten der rechteckigen Grundstruktur angeordneten seitlichen Vertiefungen (6) und/oder die im Eckbereich der rechteckigen Grundstruktur angeordneten eckseitigen Vertiefungen (7) des Querschnittes des Rahmenprofils (1) hinterschnitten (6a, 7a) sind, um die separaten Befestigungsteile (9-16) hieran rastend festzulegen.

9. Wand-, Decken- oder Bodenelement nach einem der Ansprüche 1 bis 8, **dadurch gekennzeichnet, dass** die mit den eckseitigen Vertiefungen (7) ausgestatteten Ecken der rechteckigen Grundstruktur des Querschnittes des Rahmenprofils (1) eine unter 45° in Bezug auf die Seiten der rechteckigen Grundstruktur abgeschrägte Außenkante besitzen.

10. Wand-, Decken- oder Bodenelement nach einem der Ansprüche 1 bis 9, **dadurch gekennzeichnet, dass** die Platte (3) lichtdurchlässig, insbesondere transparent, ist.

11. Wand-, Decken- oder Bodenelement nach Anspruch 10, **dadurch gekennzeichnet, dass** die Platte (3) aus Glas oder Acrylglas gebildet ist.

12. Wand-, Decken- oder Bodenelement nach einem der Ansprüche 1 bis 11, **dadurch gekennzeichnet, dass** das Rahmenprofil (1) von einem Strangpressprofil gebildet ist.

13. Wand-, Decken- oder Bodenelement nach einem der Ansprüche 1 bis 12, **dadurch gekennzeichnet, dass** das Rahmenprofil (1) aus Kunststoff, insbesondere aus einem thermoplastischen Kunststoff, oder Metall, insbesondere Aluminium oder einer Aluminiumlegierung, gebildet ist.

14. Wand-, Decken- oder Bodenelement nach einem der Ansprüche 1 bis 13, **dadurch gekennzeichnet, dass** die L-förmige Befestigungsleiste (4) aus Kunststoff, insbesondere aus einem thermoplastischen Kunststoff, gebildet ist.

15. Bauwerk, welches aus mehreren Wand- sowie gegebenenfalls Decken- und/oder Bodenelementen (E) nach einem der Ansprüche 1 bis 14 zusammengesetzt ist, insbesondere in Form eines Gewächshauses oder eines Warmhauses oder Geheges für Pflanzen und/oder Tiere, wobei die Wand- sowie gegebenenfalls die Decken- und/oder Bodenelemente (E) mittels separater Befestigungsteile (9-16), welche in die seitlichen (6) und/oder in die eckseitigen Vertiefungen (7) des Querschnittes des Rahmenprofils (1) eingreifen, lösbar miteinander verbunden sind.

16. Bausatz zur Errichtung eines aus mehreren Wand- sowie gegebenenfalls Decken- und/oder Bodenelementen (E) mit einer von einem Rahmenprofil (1) eingefassten Platte (3) zusammengesetzten Bauwerks, insbesondere in Form eines Gewächshauses oder eines Warmhauses oder Geheges für Pflanzen und/oder Tiere, mit mehreren Wand- sowie gegebenenfalls Decken- und/oder Bodenelementen (E) nach einem der Ansprüche 1 bis 14, sowie mit separaten Befestigungsteilen (9-16), die in die seitlichen (6) und/oder in die eckseitigen Vertiefungen (7) des Querschnittes des Rahmenprofils (1) einbringbar sind, um die Rahmenprofile (1) lösbar miteinander zu verbinden.

## Claims

1. Wall, ceiling or floor element (E) for a structure that can be composed of such elements (E), particularly in the form of a greenhouse or a hothouse or enclosure for plants and/or animals, wherein the wall, ceiling or floor element (E) has a plate (3) surrounded by a frame profile (1), and wherein the frame profile (1) has a cross-section which comprises:
- a rectangular base structure;
- an L-shaped recess (2) in the region of one of the corners of the rectangular basic structure for receiving the plate (3) in such a manner that in parallel with one of the adjacent sides of the rectangular basic structure provided with the L-shaped recess (2), the plate is fixed to the latter; and
- a lateral recess arranged in the central region of at least three sides of the rectangular basic structure for fixing all further wall, ceiling or floor elements (E) by means of separate fixing parts (9, 12, 16) engaging in at least the lateral recess (6), **characterised in that**
- the L-shaped recess (2) of the cross-section of the frame profile (1) in the region of their recess surface (2a), which faces towards front side of the plate (3) received in the L-shaped recess (2), and which has an undercut (2b) in order to fasten an essentially L-shaped fixing ledge (4) of the plate (3) to the undercut (2b), so that the L-shaped recess (2), together with one leg (4a) of the L-shaped fixing ledge (4), forms a U-shaped receiving structure for the plate (3);
and **in that**
- a recess (7) at the corners, arranged in the corner region of at least two corners of the rectangular basic structure of the cross-section of the frame profile (1) if provided for fixing further wall, ceiling or floor elements (E) by means of separate fixing parts (10, 11, 13-16) engaging at least in the recess (7) at the corners, wherein at least the two corner regions of the rectangular basic structure, arranged on both edges of the side of the rectangular basic structure arranged parallel with the front side of the plate (3) received in the L-shaped recess (2) and opposite to it, are equipped with such a recess (7) at the corners.

2. The wall, ceiling or floor element according to Claim 1, **characterised in that** the essentially L-shaped fastening ledge (4) of the plate (3) can be fixed so that it is locked on the undercut (2b) of the L-shaped recess (2).

3. The wall, ceiling or floor element according to Claim 1 or 2, **characterised in that** the rectangular basic structure of the cross-section of the frame profile (1) is square.

4. The wall, ceiling or floor element according to any one of Claims 1 to 3, **characterised in that** the L-shaped recess (2) of the cross-section of the frame profile (1) only extends into the central region of the rectangular basic structure so that the plate (3) is received eccentrically relative to the rectangular basic structure in the L-shaped recess (2).

5. The wall, ceiling or floor element according to any one of Claims 1 to 4, **characterised in that** the plate (3) is received in the L-shaped recess (2) in such a manner that its outer face lies essentially flush with one side of the rectangular basic structure of the cross-section of the frame profile (1).

6. The wall, ceiling or floor element according to any one of Claims 1 to 5, **characterised in that** the receiving surface (2a) of the L-shaped recess (2), which faces the front side of the plate (3) received in the L-shaped recess (2), terminates in the region of its inner end further in a recess (2c) which projects from the front side of the plate (3) received in the L-shaped recess (2) in order to fix the essentially L-shaped fastening ledge (4) of the plate (3) to the undercut (2b)and to the recess (2c).

7. The wall, ceiling or floor element according to any one of Claims 1 to 6, **characterised in that** the cross-section of the frame profile (1) has three recesses (7) at the corners, arranged in the corner region of the rectangular basic structure, for fixing further wall, ceiling or floor elements (E) by means of separate fastening parts (10, 11, 13-16) engaging at least in the recess (7) at the corners.

8. The wall, ceiling or floor element according to any one of Claims 1 to 7, **characterised in that** the lateral recesses (6) arranged in the central region of at least three sides of the rectangular basic structure and/or the recesses (7) at the corners of the cross-section of the frame profile (1) arranged in the corner region of the rectangular basic structure are undercut (6a, 7a) in order to fix the separate fastening parts (9-16) to it in a locking position.

9. The wall, ceiling or floor element according to any one of Claims 1 to 8, **characterised in that** the corners of the rectangular basic structure of the cross-section of the frame profile (1), equipped with the recesses (7) at the corners, have an outer edge bevelled at an angle of 45° to the sides of the rectangular basic structure.

10. The wall, ceiling or floor element according to any one of Claims 1 to 9, **characterised in that** the plate (3) is light-permeable, and in particular transparent.

11. The wall, ceiling or floor element according to Claim 10, **characterised in that** the plate (3) is formed from glass or acrylic glass.

12. The wall, ceiling or floor element according to any one of Claims 1 to 11, **characterised in that** the frame profile (1) is formed by an extruded profile.

13. The wall, ceiling or floor element according to any one of Claims 1 to 12, **characterised in that** the frame profile (1) is formed from plastic, particularly a thermoplastic, or metal, particularly aluminium or an aluminium alloy.

14. The wall, ceiling or floor element according to any one of Claims 1 to 13, **characterised in that** the L-shaped fastening ledge (4) is formed from plastic, particularly a thermoplastic.

15. A structure which is composed of a plurality of wall and, if necessary, ceiling and/or floor elements (E) according to any one of Claims 1 to 14, particularly in the form of a greenhouse or a hothouse or enclosure for plants and/or animals, wherein the wall and, if necessary, the ceiling and/or floor elements (E) are detachably connected to each other by means of separate fastening parts (9-16) which engage in the lateral (6) recesses and/or the recesses (7) of the cross-section of the frame profile (1) at the corners.

16. A kit for erecting a structure composed of a plurality of wall and, if necessary, ceiling and/or floor elements (E) with a plate (3) surrounded by a frame profile (1), particularly in the form of a greenhouse or a hothouse or enclosure for plants and/or animals, with a plurality of wall and, if necessary, ceiling and/or floor elements (E), according to any one of Claims 1 to 14, and with separate fastening parts (9-16) which can be inserted in the lateral recesses (6) or recesses (7) of the cross-section of the frame profile (1) at the corners in order to connect the frame profiles (1) detachably to each other.

## Revendications

1. Élément de cloison, de plafond ou de sol (E) pour un ouvrage pouvant être composé de tels éléments (E), notamment sous la forme d'une serre ou d'une salle chauffée ou d'un enclos pour des plantes et/ou des animaux, l'élément de cloison, de plafond ou de sol (E) comportant une plaque (3) bordée par un profilé d'encadrement (1) et le profilé d'encadrement (1) comprenant une section transversale comprenant :
- une structure de base rectangulaire ;
- un évidement en forme de L (2) positionné dans la zone d'un des coins de la structure de base rectangulaire et prévu pour recevoir la plaque (3) de telle sorte que la plaque (3) y soit fixée parallèlement à un des côtés, connexe, pourvu de l'évidement en forme de L (2), de la structure de base rectangulaire ; et
- respectivement un renfoncement latéral (6) disposé dans la zone centrale d'au moins trois côtés de la structure de base rectangulaire en vue de fixer les éléments de cloison, de plafond ou de sol (E) supplémentaires à l'aide de parties de fixation (9, 12, 16) séparées, s'engrenant au moins dans le renfoncement latéral (6) ;
**caractérisé en ce que** :
- l'évidement en forme de L (2) de la section transversale du profilé d'encadrement (1) est doté, dans la zone de sa surface de logement (2a) orientée vers le côté avant de la plaque (3), logé dans l'évidement en forme de L (2), d'un détouré arrière (2b) prévu pour fixer une baguette de fixation (4), pour l'essentiel en forme de L, de la plaque (3) au détouré arrière (2b), de telle sorte que le logement (2) en forme de L forme, conjointement avec un côté (4a) de la baguette de fixation (4) en forme de L, une structure de logement pour la plaque (3) en forme de U ; et que
- un renfoncement (7) situé du côté du coin et disposé dans la zone d'angle d'au moins deux coins de la structure de base rectangulaire de la section transversale du profilé d'encadrement (1) est respectivement prévu pour fixer les éléments de cloison, de plafond ou de sol (E) supplémentaires à l'aide de parties de fixation (10, 11, 13 à 16) séparées s'engrenant au moins dans le renfoncement (7) situé côté coin, au moins lesdites deux zones d'angle de la structure de base rectangulaire étant équipées d'un tel renfoncement (7) situé côté coin, ledit renfoncement étant disposé au niveau des deux bords dudit côté de la structure de base rectangulaire disposé parallèlement au côté avant de la plaque (3) logée dans l'évidement en forme de L (2) et opposé à celle-ci.

2. Élément de cloison, de plafond ou de sol selon la revendication 1, **caractérisé en ce que** la baguette de fixation (4) pour l'essentiel en forme de L de la plaque (3) peut être fixée de façon à s'encliqueter au niveau du détouré arrière (2b) de l'évidement en forme de L (2).

3. Élément de cloison, de plafond ou de sol selon la revendication 1 ou 2, **caractérisé en ce que** la structure de base rectangulaire de la section transversale du profilé d'encadrement (1) est carrée.

4. Élément de cloison, de plafond ou de sol selon l'une quelconque des revendications 1 à 3, **caractérisé en ce que** l'évidement en forme de L (2) de la section transversale du profilé d'encadrement (1) ne s'étend que jusque dans la zone centrale de la structure de base rectangulaire, de telle sorte que la plaque (3) est logée de façon excentrée dans l'évidement en forme de L (2) par rapport à la structure de base rectangulaire.

5. Élément de cloison, de plafond ou de sol selon l'une quelconque des revendications 1 à 4, **caractérisé en ce que** la plaque (3) est logée de telle sorte dans l'évidement en forme de L (2) que sa surface extérieure est pour l'essentiel alignée avec un côté de la structure de base rectangulaire de la section transversale du profilé d'encadrement (1).

6. Élément de cloison, de plafond ou de sol selon l'une quelconque des revendications 1 à 5, **caractérisé en ce que** la surface de logement (2a) de l'évidement en forme de L (2) orienté vers le côté avant de la plaque (3), logé dans l'évidement en forme de L (2), prend fin dans la zone de son extrémité intérieure s'avançant davantage dans un renfoncement (2c) qui dépasse le côté avant de la plaque (3), logé dans le logement (2) en forme de L, pour fixer la baguette de fixation (4) pour l'essentiel en forme de L de la plaque (3) au niveau du détouré arrière (2b) et du renfoncement (2c).

7. Élément de cloison, de plafond ou de sol selon l'une quelconque des revendications 1 à 6, **caractérisé en ce que** la section transversale du profilé d'encadrement (1) comporte trois renfoncements (7) situés côté coin et disposés dans la zone d'angle de la structure de base rectangulaire en vue de fixer les éléments de cloison, de plafond ou de sol (E) supplémentaires à l'aide des parties de fixation (10, 11, 13 à 16) séparées s'engrenant au moins dans le renfoncement (7) situé côté coin.

8. Élément de cloison, de plafond ou de sol selon l'une quelconque des revendications 1 à 7, **caractérisé en ce que** les renfoncements latéraux (6), disposés dans la zone centrale d'au moins trois côtés de la structure de base rectangulaire, et/ou les renfoncements (7), situés côté coin dans la zone d'angle de la structure de base rectangulaire, de la section transversale du profilé d'encadrement (1) sont découpés par l'arrière (6a, 7a), en vue d'y fixer par encliquetage les parties de fixation (9 à 16) séparées.

9. Élément de cloison, de plafond ou de sol selon l'une quelconque des revendications 1 à 8, **caractérisé en ce que** les coins, équipés des renfoncements (7) situés côté coin, de la structure de base rectangulaire de la section transversale du profilé d'encadrement (1) possèdent une arête extérieure biseautée de moins de 45 **°** par rapport aux côtés de la structure de base rectangulaire.

10. Élément de cloison, de plafond ou de sol selon l'une quelconque des revendications 1 à 9, **caractérisé en ce que** la plaque (3) est translucide, notamment transparente.

11. Élément de cloison, de plafond ou de sol selon la revendication 10, **caractérisé en ce que** la plaque (3) est en verre ou en verre acrylique.

12. Élément de cloison, de plafond ou de sol selon l'une quelconque des revendications 1 à 11, **caractérisé en ce que** le profilé d'encadrement (1) prend la forme d'un profilé extrudé.

13. Élément de cloison, de plafond ou de sol selon l'une quelconque des revendications 1 à 12, **caractérisé en ce que** le profilé d'encadrement (1) est en matière plastique, notamment en matière plastique thermoplastique, ou en métal, notamment en aluminium ou en alliage d'aluminium.

14. Élément de cloison, de plafond ou de sol selon l'une quelconque des revendications 1 à 13, **caractérisé en ce que** la baguette de fixation (4) en forme de L est en matière plastique, notamment en matière plastique thermoplastique.

15. Ouvrage, composé de plusieurs éléments de cloison ainsi que le cas échéant de plafond et/ou de sol (E) selon l'une quelconque des revendications 1 à 14, notamment sous la forme d'une serre ou d'une salle chauffée ou d'un enclos pour les plantes et/ou les animaux, les éléments de cloison ainsi que le cas échéant de plafond et/ou de sol (E) étant reliés entre eux de façon amovible à l'aide de parties de fixation (9 à 16) séparées s'emboîtant dans les renfoncements latéraux (6) et/ou dans les renfoncements situés côté coin (7) de la section transversale du profilé d'encadrement (1).

16. Kit de construction pour ériger un ouvrage composé de plusieurs éléments de cloison ainsi que le cas échéant de plafond et/ou de sol (E), avec une plaque (3) bordée d'un profilé d'encadrement (1), notamment sous la forme d'une serre ou d'une salle chauffée ou d'un enclos prévus pour des plantes et/ou des animaux, avec plusieurs éléments de cloison ainsi que le cas échéant de plafond et/ou de sol (E) selon l'une quelconque des revendications 1 à 14, ainsi qu'avec des parties de fixation (9 à 16) séparées pouvant être amenées dans les renfoncements latéraux (6) et/ou dans les renfoncements situés côté coin (7) de la section transversale du profilé d'encadrement (1), en vue de relier entre eux de façon amovible les profilés d'encadrement (1).
